# FASCICULE DE BREVET EUROPEEN

(11) **EP 3 434 002 B1**
(45) Date de publication et mention de la délivrance du brevet: **23.06.2021**
(21) Numéro de dépôt: 17716955.4
(22) Date de dépôt: 20.03.2017
(51) Int. Cl.: H04M 9/00

(54) **PROCEDE ET DISPOSITIF DE COMMANDE D'UN SYSTEME D'INTERCOMMUNICATION**
VERFAHREN UND VORRICHTUNG ZUR STEUERUNG EINER GEGENSPRECHANLAGE
METHOD AND DEVICE FOR CONTROLLING AN INTERCOMMUNICATION SYSTEM

(30) Priorité: 25.03.2016 FR 1652645
(43) Date de publication de la demande: 30.01.2019
(73) Titulaire: PSA Automobiles SA, 78300 Poissy (FR)
(72) Inventeur: SANCIER, Olivier, 78650 Beynes (FR)
(86) Numéro de dépôt international: PCT/FR2017/050647
(87) Numéro de publication internationale: WO 2017/162974

(56) Documents cités:
- EP-A2- 1 560 404
- EP-A2- 2 615 853
- JP-A- H02 312 349
- US-B1- 6 539 084

## Description

L'invention concerne un système d'intercommunication embarqué à bord d'un véhicule et, plus particulièrement, un dispositif de commande d'un tel système.

On connaît par le document US6539084 un procédé d'établissement d'un canal de communication audio privé sur un système d'interphone ayant une pluralité d'unités intercom. Le système d'interphone est activé par une commande vocale effectuée par l'intermédiaire d'au moins une des unités d'intercommunication. Les données audio sont transmises à une pluralité d'unités d'intercommunication en réponse à la commande vocale. Un canal de communication audio privé est établi entre au moins deux unités intercom, en réponse à une commande vocale effectuée par l'intermédiaire de l'une quelconque de la pluralité d'unités d'intercommunication.

Ce procédé n'est pas entièrement satisfaisant car il nécessite la diffusion à une pluralité d'unités d'intercommunication de données audio avant de pouvoir établir un canal de communication privée. Ce fonctionnement dérange les utilisateurs du système d'interphone qui ne sont pas concernés par le message.

On connait, par le document EP1560404, une unité d'entrée-sortie de données d'un véhicule connectée à toutes les unités d'entrée-sortie vocales du véhicule via une ligne de communication du véhicule, possédant un canal de données vers chaque unité d'entrée-sortie vocale, et transmettant les données d'entrée-sortie à un canal propre en se basant sur l'unité spécifiant la position du passager de l'unité de donnée d'entrée-sortie du véhicule.

On connait, par le document EP2615853, un système de communication embarqué prenant en charge les voies de communication à l'intérieur d'une voiture en recevant les signaux vocaux d'un passager parlant et en les restituant à un ou plusieurs passagers écoutant. Les tâches de traitement du signal sont divisées en une partie liée au microphone et une partie liée au haut-parleur.

On connait, par le document JPH02312349, un système permettant de tenir clairement une conversation entre un conducteur et un passager à un siège arrière en vocalisant la voix du conducteur recueillie avec un microphone dans le voisinage du siège du conducteur à partir d'un haut-parleur dans le voisinage du siège arrière, et en vocalisant celle du passager au siège arrière recueillie avec le microphone dans le voisinage du siège arrière du haut-parleur dans le voisinage du siège conducteur. Ainsi, il est possible de maintenir clairement la conversation entre le siège conducteur et le siège arrière, même en présence d'un bruit relativement important dans le véhicule.

L'invention a donc pour but de remédier au problème précité en proposant un procédé et un dispositif de commande d'un système d'intercommunication.

Elle propose plus précisément à cet effet un procédé pour commander un système d'intercommunication embarqué à bord d'un véhicule comportant une pluralité de sièges, chacun des sièges étant associés à au moins un dispositif de restitution sonore de sorte que le dispositif de restitution soit capable d'émettre un son audible uniquement par un occupant du siège, lesdits sièges étant répartis dans le véhicule par rangés, et au moins un premier dispositif d'acquisition sonore, ledit procédé comportant les étapes de :
- Détection d'une réception, par un premier dispositif d'acquisition sonore, d'un message vocal prononcé par un premier occupant du véhicule,
- Commande d'une analyse du message, par un module de reconnaissance vocale et identification d'un deuxième occupant, désigné dans le message et destinataire du message,
- Détermination, à partir du message, d'un premier siège occupé par le premier occupant,
- Détermination, à partir du message, d'un deuxième siège occupé par le deuxième occupant,
- Commande d'une diffusion du message par le dispositif de restitution sonore du deuxième siège si le premier siège et le deuxième siège sont sur des rangées différentes.

L'invention permet de commander de façon simple naturelle un système d'intercommunication dans un véhicule. L'invention met en œuvre une fonction de reconnaissance vocale pour identifier le destinataire d'un message. Le système transmet alors le message directement au destinataire si cela est nécessaire, autrement dit si le siège du destinataire n'est pas situé sur la même rangée que celui de l'émetteur du message. En effet, on considère qu'un message sonore prononcé à un volume modéré est facilement audible pour un passager situé à proximité (sur la même rangée) de l'émetteur.

Le procédé pour commander un système d'intercommunication selon l'invention comprend en outre l'ouverture d'un canal de communication entre le premier siège et le deuxième siège, de sorte qu'un message prononcé par le deuxième occupant soit retransmis sur le dispositif de restitution sonore du premier siège. Cette caractéristique permet au deuxième occupant de répondre facilement au premier occupant.

Avantageusement, l'étape d'analyse du message comprend en outre l'identification du premier occupant, ayant prononcé le message, et en ce qu'il comprend en outre des étapes de :
- Détection de la réception, par un deuxième dispositif d'acquisition sonore, d'un deuxième message vocal prononcé par le deuxième occupant du véhicule,
- Commande de l'analyse du deuxième message, par le module de reconnaissance vocale et identification d'un destinataire désigné dans le deuxième message,
- Si le destinataire identifié dans le deuxième message est différent du deuxième occupant,
- Détermination d'un troisième siège occupé par le destinataire identifié,
- Ouverture du canal de communication à un troisième siège.

Le procédé pour commander un système d'intercommunication selon l'invention comprend en outre une étape de fermeture du canal de communication :
- après un temps prédéterminé sans message échangé sur le canal de communication, ou
- en réponse à la réception et à la reconnaissance d'une commande vocale prédéterminée.

Selon une variante de l'invention, le système d'intercommunication comportant au moins un dispositif d'acquisition sonore par siège, chaque dispositif d'acquisition sonore étant associé à un seul siège, l'étape de détermination du premier siège comporte :
- la détermination du dispositif d'acquisition par lequel est reçu le message,
- la détermination du siège associé audit dispositif d'acquisition.

Selon une autre variante de l'invention, le système d'intercommunication comportant au moins un dispositif d'acquisition sonore associé à une pluralité de sièges, l'étape de détermination du premier siège comporte un traitement sonore du message.

Selon un mode réalisation, le traitement sonore comporte une étape d'identification vocale du premier occupant à partir du message et en ce que l'étape de détermination du premier siège comporte en outre la détermination du premier siège à partir de l'identité du premier occupant et d'une table prédéterminé associant sièges et occupants.

Selon un autre mode réalisation, le traitement sonore comprend des étapes de :
- analyse du message par un module dédié permettant de déterminer une direction depuis laquelle le premier occupant a prononcé son message,
- détermination du siège du premier occupant à partir de la direction déterminée et de la position du dispositif d'acquisition dans le véhicule.

L'invention concerne aussi un dispositif pour commander un système d'intercommunication embarqué à bord d'un véhicule comportant une pluralité de sièges chacun des sièges étant associés à au moins un dispositif de restitution sonore de sorte que le dispositif de restitution soit capable d'émettre un son audible uniquement par un occupant du siège, lesdits sièges étant répartis dans le véhicule par rangés, et au moins un premier dispositif d'acquisition sonore, ledit dispositif comportant
- des moyens de détection d'une réception, par un premier dispositif d'acquisition sonore, d'un message vocal prononcé par un premier occupant du véhicule,
- des moyens de commande d'une analyse du message, par un module de reconnaissance vocale et identification d'un deuxième occupant, désigné dans le message et destinataire du message,
- des moyens de détermination d'un premier siège occupé par le premier occupant,
- des moyens de détermination d'un deuxième siège occupé par le deuxième occupant,
- des moyens de commande d'une diffusion du message par le dispositif de restitution sonore du deuxième siège, si le premier siège et le deuxième siège sont sur des rangées différentes.
L'invention concerne aussi un véhicule comportant un dispositif de commande selon l'invention.

D'autres caractéristiques et avantages de l'invention apparaîtront à l'examen de la description détaillée ci-après, et des dessins annexés, sur lesquels:
- la figure 1 illustre de façon schématique un exemple de dispositif selon l'invention ;
- la figure 2 illustre un logigramme représentant le procédé selon l'invention.

Les dessins annexés pourront non seulement servir à compléter l'invention, mais aussi contribuer à sa définition, le cas échéant.

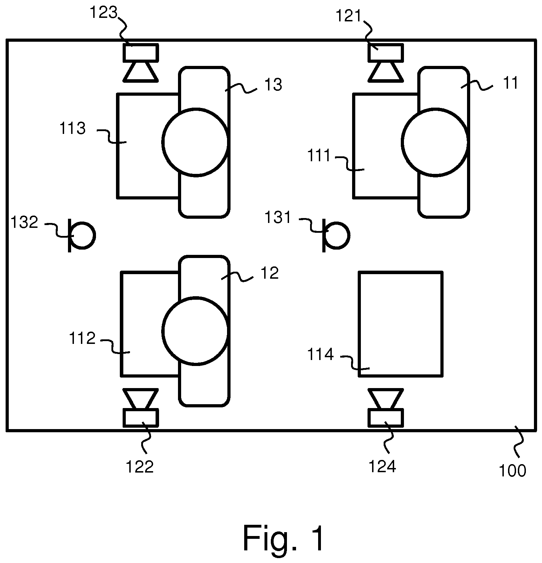

La figure 1 illustre de façon schématique un exemple de dispositif selon l'invention intégré à un véhicule.

Le véhicule 100 comporte une pluralité de sièges : un premier siège 111, un deuxième siège 112, un troisième siège 113 et un quatrième siège 114.

Les sièges sont répartis en deux rangés. Une première rangée comprend le premier 111 et le quatrième 114 siège. Une deuxième rangée comprend le deuxième 112 et le troisième 113 siège.

Selon l'invention, on considère que deux sièges sont sur une même rangée si ceux-ci sont situés sur un même axe transversal au véhicule 100. Toutefois, on considère dans le cadre de l'invention que des sièges situés sur un même axe transversal au véhicule mais séparés par un couloir (comme par exemple dans un autocar ou dans un avion) appartiennent à des rangées différentes.

Le véhicule 100 comporte aussi une pluralité de dispositifs de restitution sonore 121, 122, 123, 124, par exemple des haut-parleurs. Dans cet exemple, chaque siège 111, 112, 113, 114 est équipé d'un dispositif de restitution qui lui est propre. Mais cette caractéristique n'est pas obligatoire. Pour fonctionner, l'invention nécessite que chacun des sièges soient associés à au moins un dispositif de restitution sonore de sorte que le dispositif de restitution soit capable d'émettre un son audible uniquement par un occupant du siège. En particulier, un dispositif de restitution sonore peut être associé à plusieurs sièges, si celui-ci est apte à émettre des sons de façon suffisamment directive pour que ceux-ci soient audibles uniquement par un des occupants des sièges.

Le véhicule 100 comporte aussi une pluralité de dispositifs d'acquisition sonore 131, 132, par exemple des microphones. Dans cet exemple, chaque rangée est équipée d'un dispositif d'acquisition sonore. La première rangée comporte un premier dispositif d'acquisition sonore 131. La deuxième rangée comporte un deuxième dispositif d'acquisition sonore 132.

D'autres configurations sont possibles, en particulier de façon avantageuse, chaque siège est équipé ou associé à un dispositif d'acquisition sonore.

Le véhicule comporte en outre un dispositif de commande apte à détecter des signaux provenant des dispositifs d'acquisition sonore et apte à commander la restitution desdits signaux par un ou plusieurs dispositifs de restitution. Le dispositif de commande met en œuvre le procédé selon l'invention. Le dispositif de commande comporte :
- des moyens de détection d'une réception, par un premier dispositif d'acquisition sonore 131, d'un message vocal prononcé par un premier occupant du véhicule,
- des moyens de commande d'une analyse du message, par un module de reconnaissance vocale et identification d'un deuxième occupant, désigné dans le message et destinataire du message,
- des moyens de détermination d'un premier siège 111 occupé par le premier occupant 11,
- des moyens de détermination d'un deuxième siège 112 occupé par le deuxième occupant 12,
- des moyens de commande d'une diffusion du message par le dispositif de restitution sonore 122 du deuxième siège 112, si le premier siège 111 et le deuxième siège 112 sont sur des rangées différentes.

Les moyens d'acquisition et les moyens de réception sont reliés à un amplificateur (non représenté). Le dispositif de commande est apte à coopérer avec l'amplificateur.

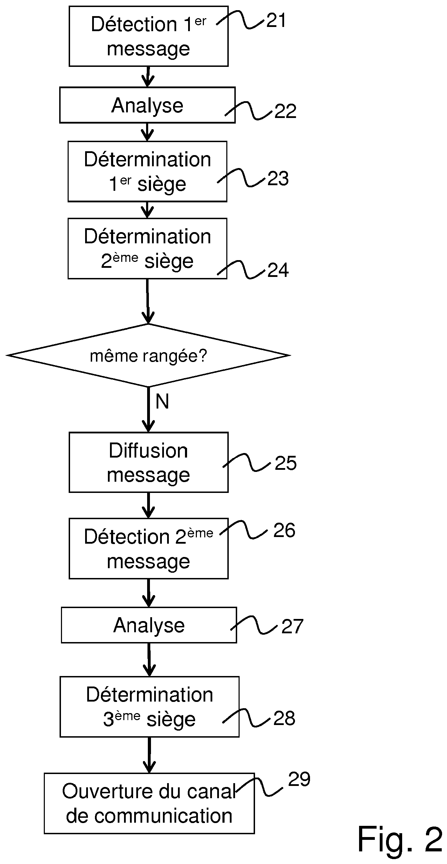

L'invention concerne aussi un procédé pour commander le système d'intercommunication embarqué à bord du véhicule 100. En référence à la figure 2, le procédé comporte des étapes de :
- Détection 21 d'une réception, par un premier dispositif d'acquisition sonore 131, d'un message vocal prononcé par un premier occupant du véhicule,
- Commande 22 d'une analyse du message, par un module de reconnaissance vocale et identification d'un deuxième occupant, désigné dans le message et destinataire du message,
- Détermination 23 d'un premier siège 111 occupé par le premier occupant 11,
- Détermination 24 d'un deuxième siège 112 occupé par le deuxième occupant 12,
- Si le premier siège 111 et le deuxième siège 112 sont sur des rangées différentes alors la commande 25 d'une diffusion du message par le dispositif de restitution sonore 122 du deuxième siège 112.

De façon avantageuse, le procédé selon l'invention comprend en outre l'ouverture d'un canal de communication entre le premier siège 111 et le deuxième siège 112 de sorte qu'un message prononcé par le deuxième occupant 12 soit retransmis sur le dispositif de restitution sonore du premier siège 111. On peut noter que les messages prononcés par le premier occupant 11 sont aussi retransmis sur le dispositif de restitution sonore du deuxième siège 112.

De façon avantageuse, l'étape d'analyse 22 du message comprend en outre l'identification, par le module de reconnaissance vocale, du premier occupant 11, ayant prononcé le message.

De façon avantageuse, le procédé selon l'invention comprend en outre des étapes de :
- Détection 26 de la réception, par un deuxième dispositif d'acquisition sonore 131, d'un deuxième message vocal prononcé par le deuxième occupant 12 du véhicule 100,
- Commande 27 de l'analyse du deuxième message, par le module de reconnaissance vocale et identification d'un destinataire désigné dans le deuxième message,
- Si le destinataire identifié dans le deuxième message est différent du deuxième occupant 12, alors
- La détermination 28 d'un troisième siège 113 occupé par le destinataire identifié,
- L'ouverture 29 du canal de communication à un troisième siège 113.

Selon une caractéristique de l'invention, le procédé pour commander le système d'intercommunication comprend en outre une étape de fermeture du canal de communication :
- après un temps prédéterminé sans message échangé sur le canal de communication, ou
- en réponse à la réception et à la reconnaissance d'une commande vocale prédéterminée.

Selon un premier mode de réalisation, le système d'intercommunication comporte au moins un dispositif d'acquisition sonore par siège. Chaque dispositif d'acquisition sonore est associé à un seul siège. Dans ce cas, l'étape de détermination 23 du premier siège 111 comporte :
- la détermination du dispositif d'acquisition par lequel est reçu le message,
- la détermination du siège associé audit dispositif d'acquisition. Autrement dit, la détermination du micro ayant capté le message permet de déterminer directement le siège associé.

Selon un deuxième mode de réalisation, le système d'intercommunication comportant au moins un dispositif d'acquisition sonore associé à une pluralité de sièges, comme cela est le cas dans l'exemple de la figure 1. Dans ce cas, l'étape de détermination 23 du premier siège 111 comporte un traitement sonore du message.

Selon une première variante, le traitement sonore comporte une étape d'identification vocale du premier occupant 11 à partir du message. L'étape de détermination 23 du premier siège 111 est alors réalisée en associant le premier siège à l'identité du premier occupant 11 par exemple à partir d'une table prédéterminé associant sièges et occupants.

Selon une deuxième variante, le traitement sonore comprend une étape d'analyse du message par un module dédié permettant de déterminer une direction depuis laquelle le premier occupant a prononcé son message. Dans cette variante, la détermination du siège du premier occupant est réalisée à partir de la direction déterminée et de la position du dispositif d'acquisition dans le véhicule.

On décrit ci-après un exemple d'utilisation du procédé et du dispositif selon l'invention. Pour illustrer l'exemple, on se réfère à la figure 1. Trois personnes sont présentes dans une voiture 100 : un père 13, John, sa femme Lucie 12 et leur fille Emilie 11.

Emilie 11 prononce la phrase suivante : « Papa, quand est ce qu'on arrive? ».

Ce message est capté 21 par le premier micro 131. Le message est ensuite analysé 22 par le module de reconnaissance vocale. Le module de reconnaissance reconnait le destinataire du message dont le nom ou le surnom (dans l'exemple papa) a été prononcé.

L'étape suivante est la détermination 23 du siège occupé par Emilie. Dans l'exemple, on suppose que le système reconnait Emilie grâce à une fonction d'identification vocale.

On suppose en outre que le dispositif comprend une table prédéterminé associant sièges et occupants. Le siège occupé par Emilie est déterminé en utilisant cette table.

Le dispositif détermine également le siège occupé par le destinataire du message déterminé précédemment. Si le siège occupé par l'émetteur du message est situé sur la même rangé que le siège du destinataire alors le message n'est pas retransmis.

Par contre, si les deux sièges sont situés sur des rangés différentes alors le dispositif commande l'ouverture d'une liaison (ou canal de communication) entre le siège 111 d'Emilie et celui 112 de John. Par la suite, un message prononcé par John 12 est retransmis sur le dispositif de restitution sonore 121 du siège 111 d'Emilie.

Par ailleurs le message est transmis 25 au dispositif de restitution sonore 122 du deuxième siège 112.

On peut noter que le message n'est pas retransmis immédiatement. Le dispositif met dans une mémoire (aussi appelée buffer) le message sur la durée du mot d'accès. Un décalage égal à la durée de prononciation du mot est donc perceptible. Cette fonction permet de retranscrire l'intégralité du message. Le père 12 entendra donc : « Papa, quand est-ce qu'on arrive? » avec un léger décalage. Le mot « Papa » est le mot d'ouverture d'une session de communication.

John 12 répond alors « Lucie peux-tu regarder? ».

Ce message est capté par le deuxième micro 132. Le message est ensuite analysé 22 par le module de reconnaissance vocale. Le module de reconnaissance reconnait le destinataire du message dont le nom (dans l'exemple Lucie) ou le surnom a été prononcé.

L'étape suivante est la détermination du siège 113 occupé par Lucie 13, la destinataire du message.

Puis le dispositif ouvre la communication en cours au troisième siège 113 de sorte que le troisième dispositif de restitution 123 restitue les messages échangés entre John 12 et Emilie 11 et que les messages captés par le deuxième micro et étant reconnus comme étant prononcés par Lucie sont retransmis à John 12 et Emilie 11.

Dans l'exemple, on suppose que le système reconnait Emilie grâce à une fonction d'identification vocale.

On suppose en outre que le dispositif comprend une table prédéterminée associant sièges et occupants. Le siège occupé par Emilie est déterminé en utilisant cette table.

Le dispositif détermine également le siège occupé par le destinataire du message déterminé précédemment. Si le siège occupé par l'émetteur du message est situé sur la même rangé que le siège du destinataire alors le message n'est pas retransmis.

Lucie et John étant l'un à côté de l'autre, il n'y a pas de retransmission de John vers Lucie. Par contre, le message est bien restitué à Emilie à l'arrière de la voiture. Désormais la conversation est ouverte entre Lucie, John et Emilie. Tout ce que dit Emilie est restitué instantanément à John et Lucie et tout ce que disent John et Lucie est restitué à Emilie. La conversation s'arrête après une temporisation (aussi appelée time out) ou via un mot prédéfini du type "Terminé".

## Revendications

1. Procédé pour commander un système d'intercommunication embarqué à bord d'un véhicule (100) comportant une pluralité de sièges (111, 112), chacun des sièges (111, 112) étant associés à au moins un dispositif de restitution sonore de sorte que le dispositif de restitution soit capable d'émettre un son audible uniquement par un occupant du siège, lesdits sièges (111, 112) étant répartis dans le véhicule (100) par rangés, et au moins un premier dispositif d'acquisition sonore (131), ledit procédé comportant les étapes de :
- Détection (21) d'une réception, par un premier dispositif d'acquisition sonore (131), d'un message vocal prononcé par un premier occupant du véhicule,
- Commande (22) d'une analyse du message, par un module de reconnaissance vocale et identification d'un deuxième occupant, désigné dans le message et destinataire du message,
- Détermination (23), à partir du message, d'un premier siège (111) occupé par le premier occupant (11),
- Détermination (24), à partir du message, d'un deuxième siège (112) occupé par le deuxième occupant (12),
- Commande (25) d'une diffusion du message par le dispositif de restitution sonore (122) du deuxième siège (112) si le premier siège (111) et le deuxième siège (112) sont sur des rangées différentes.

2. Procédé pour commander un système d'intercommunication selon la revendication 1, **caractérisé en ce qu'**il comprend en outre l'ouverture d'un canal de communication entre le premier siège (111) et le deuxième siège (112), de sorte qu'un message prononcé par le deuxième occupant (12) soit retransmis sur le dispositif de restitution sonore du premier siège (111).

3. Procédé pour commander un système d'intercommunication selon la revendication 2, **caractérisé en ce que** l'étape d'analyse (22) du message comprend en outre l'identification du premier occupant (11), ayant prononcé le message, et **en ce qu'**il comprend en outre des étapes de :
- Détection (26) de la réception, par un deuxième dispositif d'acquisition sonore (131), d'un deuxième message vocal prononcé par le deuxième occupant (12) du véhicule (100),
- Commande (27) de l'analyse du deuxième message, par le module de reconnaissance vocale et identification d'un destinataire désigné dans le deuxième message,
- Si le destinataire identifié dans le deuxième message est différent du deuxième occupant (12),
- Détermination (28) d'un troisième siège (113) occupé par le destinataire identifié,
- Ouverture (29) du canal de communication à un troisième siège (113).

4. Procédé pour commander un système d'intercommunication selon l'une des revendications précédentes, **caractérisé en ce qu'**il comprend en outre une étape de fermeture du canal de communication :
- après un temps prédéterminé sans message échangé sur le canal de communication, ou
- en réponse à la réception et à la reconnaissance d'une commande vocale prédéterminée.

5. Procédé pour commander un système d'intercommunication selon l'une des revendications précédentes, **caractérisé en ce que**, le système d'intercommunication comportant au moins un dispositif d'acquisition sonore par siège, chaque dispositif d'acquisition sonore étant associé à un seul siège, l'étape de détermination (23) du premier siège (111) comporte :
- la détermination du dispositif d'acquisition par lequel est reçu le message,
- la détermination du siège associé audit dispositif d'acquisition.

6. Procédé pour commander un système d'intercommunication selon l'une des revendications 1 à 4, **caractérisé en ce que**, le système d'intercommunication comportant au moins un dispositif d'acquisition sonore associé à une pluralité de sièges, l'étape de détermination (23) du premier siège (111) comporte un traitement sonore du message.

7. Procédé pour commander un système d'intercommunication selon la revendication 6, **caractérisé en ce que** le traitement sonore comporte une étape d'identification vocale du premier occupant (11) à partir du message et **en ce que** l'étape de détermination (23) du premier siège (111) comporte en outre la détermination du premier siège à partir de l'identité du premier occupant (11) et d'une table prédéterminé associant sièges et occupants.

8. Procédé pour commander un système d'intercommunication selon la revendication 6, **caractérisé en ce que** le traitement sonore comprend des étapes de :
- analyse du message par un module dédié permettant de déterminer une direction depuis laquelle le premier occupant a prononcé son message,
- détermination du siège du premier occupant à partir de la direction déterminée et de la position du dispositif d'acquisition dans le véhicule.

9. Dispositif pour commander un système d'intercommunication embarqué à bord d'un véhicule (100) comportant une pluralité de sièges (111, 112) chacun des sièges (111, 112) étant associés à au moins un dispositif de restitution sonore de sorte que le dispositif de restitution soit capable d'émettre un son audible uniquement par un occupant du siège, lesdits sièges (111, 112) étant répartis dans le véhicule (100) par rangés, et au moins un premier dispositif d'acquisition sonore (131), ledit dispositif comportant :
- des moyens de détection d'une réception, par un premier dispositif d'acquisition sonore (131), d'un message vocal prononcé par un premier occupant du véhicule,
- des moyens de commande d'une analyse du message, par un module de reconnaissance vocale et identification d'un deuxième occupant, désigné dans le message et destinataire du message,
- des moyens de détermination d'un premier siège (111) occupé par le premier occupant (11),
- des moyens de détermination d'un deuxième siège (112) occupé par le deuxième occupant (12),
- des moyens de commande d'une diffusion du message par le dispositif de restitution sonore (122) du deuxième siège (112), si le premier siège (111) et le deuxième siège (112) sont sur des rangées différentes.

10. Véhicule comportant un dispositif de commande selon la revendication précédente.

## Patentansprüche

1. Verfahren zum Steuern eines bordeigenen Interkommunikationssystems in einem Fahrzeug (100), das eine Vielzahl von Sitzen (111, 112) umfasst, wobei jeder der Sitze (111, 112) mit mindestens einer Tonwiedergabevorrichtung verbunden ist, so dass die Wiedergabevorrichtung in der Lage ist, einen Ton auszusenden, der nur für einen Insassen des Sitzes hörbar ist, wobei die Sitze (111, 112) in dem Fahrzeug (100) in Reihen verteilt sind, und mindestens eine erste Tonerfassungsvorrichtung (131), wobei das Verfahren die folgenden Schritte umfasst: :
- Erkennen (21) eines Empfangs einer von einem ersten Insassen des Fahrzeugs gesprochenen Sprachnachricht durch eine erste Geräuscherfassungsvorrichtung (131),
- Steuerung (22) einer Analyse der Nachricht durch ein Spracherkennungsmodul und Identifizierung eines zweiten, in der Nachricht bezeichneten Insassen und Empfängers der Nachricht,
- Bestimmung (23) eines ersten Sitzes (111), der von dem ersten Insassen (11) belegt wird, aus der Meldung,
- Bestimmen (24) eines zweiten Sitzes (112), der von dem zweiten Insassen (12) belegt wird, aus der Meldung,
- Steuerung (25) einer Übertragung der Nachricht durch die Tonwiedergabevorrichtung (122) des zweiten Sitzes (112), wenn sich der erste Sitz (111) und der zweite Sitz (112) in verschiedenen Reihen befinden.

2. Verfahren zur Steuerung einer Wechselsprechanlage nach Anspruch 1, **dadurch gekennzeichnet, dass** es ferner das Öffnen eines Kommunikationskanals zwischen dem ersten Sitz (111) und dem zweiten Sitz (112) umfasst, so dass eine von dem zweiten Insassen (12) gesprochene Nachricht auf der Tonwiedergabevorrichtung des ersten Sitzes (111) wiedergegeben wird.

3. Verfahren zur Steuerung einer Gegensprechanlage nach Anspruch 2, **dadurch gekennzeichnet, dass** der Schritt des Analysierens (22) der Nachricht ferner das Identifizieren des ersten Insassen (11) umfasst, der die Nachricht gesprochen hat, und dass es ferner die folgenden Schritte umfasst:
- Erfassen (26) des Empfangs einer zweiten Sprachnachricht, die von dem zweiten Insassen (12) des Fahrzeugs (100) gesprochen wird, durch eine zweite Tonaufnahmevorrichtung (131),
- Steuerung (27) der Analyse der zweiten Nachricht, durch das Spracherkennungsmodul und Identifizierung eines in der zweiten Nachricht bezeichneten Empfängers,
- wenn der in der zweiten Nachricht identifizierte Empfänger ein anderer ist als der zweite Bewohner (12),
- Bestimmung (28) eines dritten Sitzplatzes (113), der von dem identifizierten Empfänger belegt wird,
- Öffnen (29) des Kommunikationskanals zu einem dritten Sitz (113).

4. Verfahren zur Steuerung eines Interkommunikationssystems nach einem der vorhergehenden Ansprüche, **dadurch gekennzeichnet, dass** es ferner einen Schritt zum Schließen des Kommunikationskanals umfasst:
- nach einer vorgegebenen Zeit, in der keine Nachricht auf dem Kommunikationskanal ausgetauscht wurde, oder
- in Reaktion auf den Empfang und die Erkennung eines vorgegebenen Sprachbefehls.

5. Verfahren zur Steuerung einer Wechselsprechanlage nach einem der vorhergehenden Ansprüche, **dadurch gekennzeichnet, dass** die Wechselsprechanlage mindestens eine Schallempfangseinrichtung pro Sitzplatz umfasst, wobei jede Schallempfangseinrichtung einem einzelnen Sitzplatz zugeordnet ist, wobei der Schritt des Ermittelns (23) des ersten Sitzplatzes (111) umfasst:
- Bestimmung des Erfassungsgeräts, von dem die Nachricht empfangen wurde
- Bestimmen des Sitzes, der mit dem besagten Erfassungsgerät verbunden ist.

6. Verfahren zur Steuerung einer Wechselsprechanlage nach einem der Ansprüche 1 bis 4, **dadurch gekennzeichnet, dass** die Wechselsprechanlage mindestens eine einer Mehrzahl von Sitzen zugeordnete Schallempfangseinrichtung umfasst, wobei der Schritt der Bestimmung (23) des ersten Sitzes (111) eine Schallverarbeitung der Nachricht umfasst.

7. Verfahren zur Steuerung einer Wechselsprechanlage nach Anspruch 6, **dadurch gekennzeichnet, dass** die Tonverarbeitung einen Schritt der Sprachidentifikation des ersten Insassen (11) aus der Nachricht umfasst und dass der Schritt der Bestimmung (23) des ersten Sitzes (111) weiterhin die Bestimmung des ersten Sitzes aus der Identität des ersten Insassen (11) und aus einer vorgegebenen Tabelle, die Sitze und Insassen zuordnet, umfasst

8. Verfahren zur Steuerung eines Interkommunikationssystems nach Anspruch 6, **dadurch gekennzeichnet, dass** die Tonverarbeitung die Schritte umfasst: :
- Analyse der Nachricht durch ein spezielles Modul, um eine Richtung zu bestimmen, aus der der erste Bewohner seine Nachricht geäußert hat,
- Bestimmen des Sitzes des ersten Insassen aus der ermittelten Richtung und der Position des Erfassungsgerätes im Fahrzeug.

9. Vorrichtung zur Steuerung eines bordeigenen Interkommunikationssystems in einem Fahrzeug (100), das eine Vielzahl von Sitzen (111, 112) umfasst, wobei jeder der Sitze (111, 112) mit mindestens einer Tonwiedergabevorrichtung verbunden ist, so dass die Wiedergabevorrichtung in der Lage ist, einen Ton zu emittieren, der nur für einen Insassen des Sitzes hörbar ist, wobei die genannten Sitze (111, 112) in dem Fahrzeug (100) in Reihen verteilt sind, und mindestens eine erste Tonerfassungsvorrichtung (131), wobei die genannte Vorrichtung umfasst:
- Mittel zum Erfassen eines Empfangs einer von einem ersten Insassen des Fahrzeugs gesprochenen Sprachnachricht durch eine erste Schallerfassungsvorrichtung (131),
- Mittel zur Steuerung einer Analyse der Nachricht durch ein Spracherkennungsmodul und Identifizierung eines zweiten, in der Nachricht bezeichneten Insassen und Empfängers der Nachricht
- Mittel zur Bestimmung eines ersten Sitzes (111), der von dem ersten Insassen (11) belegt ist
- Mittel zur Bestimmung eines zweiten Sitzes (112), der von dem zweiten Insassen (12) belegt wird
- Mittel zum Steuern einer Übertragung der Nachricht durch die Tonwiedergabevorrichtung (122) des zweiten Sitzes (112), wenn sich der erste Sitz (111) und der zweite Sitz (112) auf verschiedenen Reihen befinden.

10. Fahrzeug mit einem Steuergerät nach dem vorhergehenden Anspruch.

## Claims

1. A method for controlling an on-board intercommunication system in a vehicle (100) comprising a plurality of seats (111, 112), each of the seats (111, 112) being associated with at least one sound reproduction device so that the reproduction device is capable of emitting a sound audible only to an occupant of the seat, said seats (111, 112) being distributed in the vehicle (100) in rows, and at least a first sound acquisition device (131), said method comprising the steps of :
- Detecting (21) a reception, by a first sound acquisition device (131), of a voice message spoken by a first occupant of the vehicle,
- Control (22) of an analysis of the message, by a voice recognition module and identification of a second occupant, designated in the message and recipient of the message,
- Determination (23), from the message, of a first seat (111) occupied by the first occupant (11),
- Determining (24) from the message a second seat (112) occupied by the second occupant (12),
- Controlling (25) a broadcast of the message by the sound reproduction device (122) of the second seat (112) if the first seat (111) and the second seat (112) are in different rows.

2. A method for controlling an intercommunication system according to claim 1, **characterized in that** it further comprises opening a communication channel between the first seat (111) and the second seat (112), so that a message spoken by the second occupant (12) is replayed on the sound reproduction device of the first seat (111).

3. A method for controlling an intercommunication system according to claim 2, **characterised in that** the step of analysing (22) the message further comprises identifying the first occupant (11), having spoken the message, and **in that** it further comprises steps of:
- Detecting (26) the reception, by a second sound acquisition device (131), of a second voice message spoken by the second occupant (12) of the vehicle (100),
- Controlling (27) the analysis of the second message, by the voice recognition module and identifying a recipient designated in the second message,
- If the recipient identified in the second message is different from the second occupant (12),
- Determining (28) a third seat (113) occupied by the identified recipient,
- Opening (29) the communication channel to a third seat (113).

4. Method for controlling an intercommunication system according to one of the preceding claims, **characterised in that** it further comprises a step of closing the communication channel:
- after a predetermined time without a message exchanged on the communication channel, or
- in response to the reception and recognition of a predetermined voice command.

5. Method for controlling an intercommunication system according to one of the preceding claims, **characterised in that**, the intercommunication system comprising at least one sound acquisition device per seat, each sound acquisition device being associated with a single seat, the step of determining (23) the first seat (111) comprises:
- determining the acquisition device by which the message is received
- determining the seat associated with the said acquisition device.

6. Method for controlling an intercommunication system according to one of claims 1 to 4, **characterised in that**, the intercommunication system comprising at least one sound acquisition device associated with a plurality of seats, the step of determining (23) the first seat (111) comprises sound processing of the message.

7. Method for controlling an intercommunication system according to claim 6, **characterised in that** the sound processing comprises a step of vocal identification of the first occupant (11) from the message and **in that** the step of determining (23) the first seat (111) further comprises the determination of the first seat from the identity of the first occupant (11) and from a predetermined table associating seats and occupants.

8. A method for controlling an intercommunication system according to claim 6, **characterised in that** the sound processing comprises steps of :
- analysing the message by a dedicated module to determine a direction from which the first occupant uttered his message,
- determining the seat of the first occupant from the determined direction and the position of the acquisition device in the vehicle.

9. Device for controlling an on-board intercommunication system in a vehicle (100) comprising a plurality of seats (111, 112), each of the seats (111, 112) being associated with at least one sound reproduction device so that the reproduction device is capable of emitting a sound audible only to an occupant of the seat, the said seats (111, 112) being distributed in the vehicle (100) in rows, and at least a first sound acquisition device (131), the said device comprising :
- means for detecting a reception, by a first sound acquisition device (131), of a voice message spoken by a first occupant of the vehicle,
- means for controlling an analysis of the message, by a voice recognition module and identification of a second occupant, designated in the message and recipient of the message
- means for determining a first seat (111) occupied by the first occupant (11)
- means for determining a second seat (112) occupied by the second occupant (12)
- means for controlling a broadcast of the message by the sound reproduction device (122) of the second seat (112), if the first seat (111) and the second seat (112) are in different rows.

10. A vehicle comprising a control device according to the preceding claim.
